# FASCICULE DE BREVET EUROPEEN

(11) **EP 3 701 128 B1**
(45) Date de publication et mention de la délivrance du brevet: **23.02.2022**
(21) Numéro de dépôt: 18800727.2
(22) Date de dépôt: 25.10.2018
(51) Int. Cl.: F01D 11/24, F02C 7/18

(54) **DISPOSITIF DE MAINTIEN D'UN TUBE DE REFROIDISSEMENT POUR CARTER DE TURBOMACHINE**
RÜCKHALTEVORRICHTUNG FÜR EIN KÜHLROHR FÜR EIN TURBOMASCHINENGEHÄUSE
RETENTION DEVICE FOR A COOLING TUBE FOR A TURBOMACHINE CASE

(30) Priorité: 27.10.2017 FR 1760145
(43) Date de publication de la demande: 02.09.2020
(73) Titulaire: Safran Aircraft Engines, 75015 Paris (FR)
(72) Inventeur: DURAND, Didier Noël, 77550 Moissy Cramayel (FR); DELAPORTE, Nicolas, 77550 Moissy Cramayel (FR); BEGUIN, Anthony, Pierre, 77550 Moissy Cramayel (FR)
(74) Mandataire: Cabinet Camus Lebkiri
(86) Numéro de dépôt international: PCT/FR2018/052655
(87) Numéro de publication internationale: WO 2019/081861

(56) Documents cités:
- FR-A1- 2 995 022
- FR-A1- 3 002 590
- FR-A1- 3 021 700
- US-A1- 2008 089 775

## Description

### DOMAINE TECHNIQUE DE L'INVENTION

Le domaine technique de l'invention est, d'une façon générale, celui des turbomachines, et plus particulièrement celui du refroidissement de différents éléments d'une turbomachine, notamment des carters de turbine basse pression de turbomachine.

La présente invention concerne plus particulièrement un dispositif de maintien d'un système de refroidissement par jets d'air d'un carter de turbine basse pression de turbomachine.

### ARRIERE PLAN TECHNOLOGIQUE DE L'INVENTION

Pour assurer le refroidissement de certains carters, et notamment de carter de turbine basse pression, on prévoit un dispositif de refroidissement qui fait intervenir un ensemble de tubes de refroidissement, également appelés rampes de refroidissement, percés de trous et disposés à l'extérieur du carter, le plus souvent en entourant ledit carter, de telle sorte que de l'air, aspiré en amont de la turbomachine par rapport à la direction d'écoulement des gaz dans la turbomachine, est envoyé vers la face externe du carter. Le système de refroidissement est composé en outre de deux boitiers, disposés de part et d'autre du carter, alimentant les tubes de refroidissement, de telle sorte que chaque boitier alimente en air des tubes de refroidissement entourant le carter sur environ un quart de sa circonférence.

On connait des systèmes de refroidissement de type LPTCC (Low Pressure Turbine Clearance Control en langue anglaise, pour contrôle des jeux pour turbine basse pression). Le système LPTCC peut être commandé par le FADEC (acronyme anglais de Full Authority Digital Engine Control, qui désigne un régulateur numérique de moteur à pleine autorité pour moteur d'aéronef) ; on parle alors de contrôle actif, le système étant alors désigné par l'acronyme LPTACC. Lorsqu'il n'est pas contrôlé par le FADEC, on parle de contrôle passif pour le système LPTCC. Sa fonction principale est de réguler le jeu entre les pièces de la turbine basse pression en modulant le refroidissement et le débit d'air prélevé du flux secondaire pour le refroidissement du carter de turbine basse pression.

Les tubes de refroidissement des systèmes LPTCC ou LPTACC, sont maintenus en position autour du carter par les boitiers d'alimentation et par des tôles de fixation, solidaires du carter. Les tôles de fixation sont généralement des tôles planes sous lesquelles viennent se fixer des colliers de fixation, également appelés colliers à douche. Les colliers de fixation entourent les tubes de refroidissement et garantissent leur positionnement autour du carter.

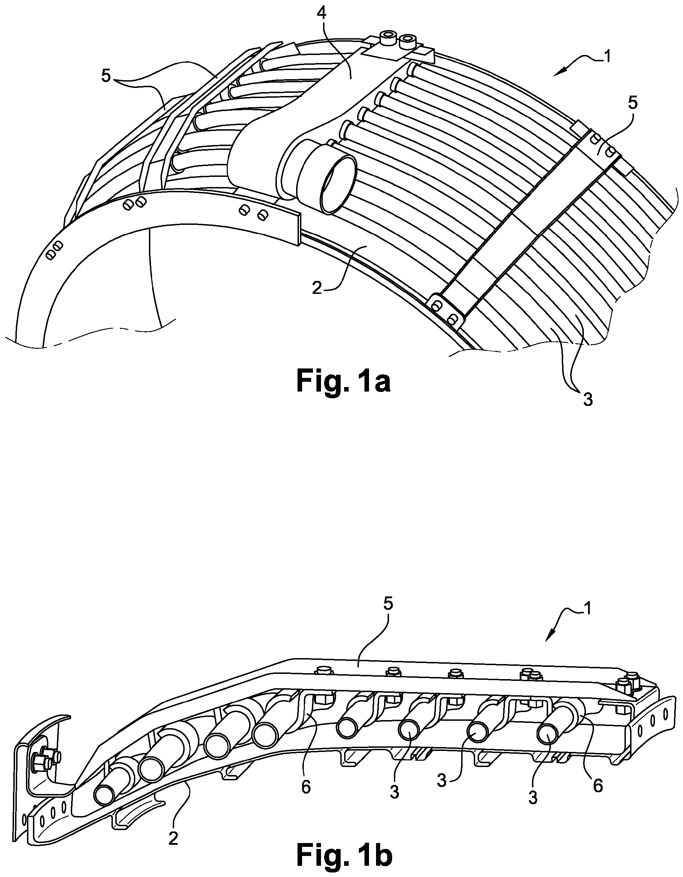

A cet effet, la figure 1a montre une première vue en perspective d'un système de refroidissement 1 pour carter de turbine basse pression d'une turbomachine selon l'état de la technique. La figure 1a montre un carter 2 de turbomachine, un système de refroidissement 1 pour le refroidissement du carter 2 comportant une pluralité de tubes de refroidissement 3, un boîtier d'alimentation 4 alimentant en air la pluralité de tubes de refroidissement, une pluralité de tôles de fixation 5 pour le maintien en position des tubes de refroidissement 3 autour du carter 2.

La figure 1b montre une deuxième vue en perspective du système de refroidissement 1 pour carter de turbomachine selon l'état de la technique. La figure 1b montre plus particulièrement une tôle de fixation sous laquelle vient se fixer une pluralité de colliers 6, chaque collier 6 entourant un tube de refroidissement 3.

Un certain jeu (dans le sens radial de la turbine) est ménagé entre les colliers de fixation ou les tubes de refroidissement et l'enveloppe externe du carter notamment pour éviter tout contact des pièces (colliers de fixation, tubes de refroidissement, carter) qui pourrait occasionner des dommages.

Toutefois, le jeu entre les tubes de refroidissement et l'enveloppe externe du carter doit être le plus restreint possible pour positionner les tubes de refroidissement au plus près de l'enveloppe du carter et pour optimiser son refroidissement.

En pratique, les contraintes technologiques, techniques, comme notamment les tolérances des pièces, les phénomènes vibratoires en fonctionnement, les dilatations des pièces en fonctionnement, imposent d'éloigner les tubes de refroidissement pour éviter tout contact entre les colliers de fixation (ou les tubes de refroidissement) qui pourrait endommager les pièces en contact, et notamment l'enveloppe externe du carter.

La difficulté technique actuelle est de trouver un bon compromis de positionnement radial des tubes de refroidissement permettant d'éviter l'usure des pièces tout en rendant le système de refroidissement le plus efficace possible. En effet, un jeu optimal est difficile à garantir et à maîtriser car le carter et les tubes de refroidissement sont des pièces de grand diamètre et les différentes pièces intermédiaires intervenant dans le maintien des tubes provoquent une accumulation des tolérances qui augmentent par conséquent le jeu minimal admissible.

Il a été notamment présenté différentes solutions permettant de mieux répondre à certaines contraintes, notamment sur des turbomachines de petite taille. De telles solutions sont notamment décrites dans les documents FR1258238, FR1351676 et FR1454790.

Le document FR1454790 décrit par exemple une solution permettant de mieux maîtriser le positionnement du tube de refroidissement en diminuant le nombre de pièces intermédiaires pour le maintien des tubes de refroidissement. Une telle solution permet notamment de minimiser l'accumulation des tolérances liées à chaque pièce intermédiaire et donc de mieux maitriser le positionnement des tubes de refroidissement.

Toutefois, dans certaines situations et dans certaines configurations de turbomachine, les solutions connues ne sont pas complétement satisfaisantes et les contraintes d'efficacité de refroidissement imposent de réduire les jeux. Dans ces situations, des contacts entre les colliers de fixation ou les tubes de refroidissement et l'enveloppe de carter peuvent apparaître.

### DESCRIPTION GENERALE DE L'INVENTION

L'invention offre une solution aux problèmes évoqués précédemment, en proposant un dispositif de maintien permettant un réglage fin et précis de la position des tubes de refroidissement lors du montage autour du carter de manière à maitriser le jeu entre les tubes de refroidissement et l'enveloppe du carter en fonction notamment des contraintes dimensionnelles réelles des pièces assemblées et des performances moteur déterminées lors de campagnes d'essai.

A cet effet, l'invention a pour objet un dispositif de maintien d'au moins un tube de refroidissement d'un système de refroidissement de carter de turbomachine, le carter s'étendant autour d'une direction axiale de la turbomachine, le dispositif de maintien comportant une tôle de fixation adaptée pour être solidarisée au carter et un élément de maintien du tube de refroidissement, ledit dispositif de maintien étant caractérisé en ce qu'il comporte un moyen de réglage configuré pour régler la position relative dudit élément de maintien par rapport à ladite tôle de fixation et pour amortir un mouvement relatif entre l'élément de maintien et la tôle de fixation.

Outre les caractéristiques évoquées dans le paragraphe précédent, le dispositif de maintien selon l'invention peut présenter une ou plusieurs caractéristiques complémentaires parmi les suivantes, considérées individuellement ou selon toutes les combinaisons techniquement possibles :
- ladite tôle de fixation comporte une ouverture et ledit moyen de réglage comporte un corps solidaire dudit ledit élément de maintien, ledit corps étant mobile en translation au travers de ladite ouverture ;
- ledit corps est un corps cylindrique présentant une portion filetée ;
- ledit moyen de réglage comporte un élément de vissage coopérant avec ladite portion filetée dudit corps pour régler la position relative dudit élément de maintien par rapport à ladite tôle de fixation ;
- l'élément de vissage est un écrou auto-freiné ;
- ledit moyen de réglage comporte un élément élastique de rappel pour amortir un mouvement relatif entre l'élément de maintien et la tôle de fixation ;
- ledit élément de maintien est configuré pour être agencé en contact solidaire avec une partie radialement externe dudit au moins un tube de refroidissement ;
- ledit élément de maintien est configuré pour être agencé en contact solidaire avec deux tubes de refroidissement ;
- ladite ouverture présente une forme autorisant un déplacement dudit élément de maintien dans un plan orthogonal à un axe de l'ouverture de ladite tôle de fixation ;
- ladite ouverture présente une forme oblongue.

La présente invention a également pour objet un système de refroidissement de carter de turbomachine comportant un tube de refroidissement ; un dispositif de maintien d'au moins un tube de refroidissement selon l'invention, ledit tube de refroidissement étant solidaire dudit dispositif de maintien par brasage.

Avantageusement, le système de refroidissement de carter de turbomachine selon l'invention comporte une pluralité de tubes de refroidissement, une pluralité de dispositifs de maintien, chaque dispositif de maintien de ladite pluralité assurant le maintien et le réglage simultané de la position de deux tubes de refroidissement adjacents par rapport au carter.

L'invention a également pour objet un carter de turbine basse pression de turbomachine caractérisé en ce qu'il comporte un système de refroidissement selon l'invention disposé de façon radialement externe par rapport au carter.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.
La figure 1a illustre une première vue en perspective d'un système de refroidissement pour carter de turbomachine selon l'état de la technique.
La figure 1b illustre une deuxième vue en perspective du système de refroidissement pour carter de turbomachine illustré à la figure 1a.
La figure 2 est une vue en coupe partielle d'un exemple de réalisation d'un système de refroidissement par jets d'air selon l'invention monté autour d'un carter de turbine.

Sauf précision contraire, un même élément apparaissant sur des figures différentes présente une référence unique.

### DESCRIPTION DETAILLEE D'AU MOINS UN MODE DE REALISATION DE L'INVENTION

Les figures 1a et 1b ont déjà été décrites précédemment comme arrière-plan technologique.

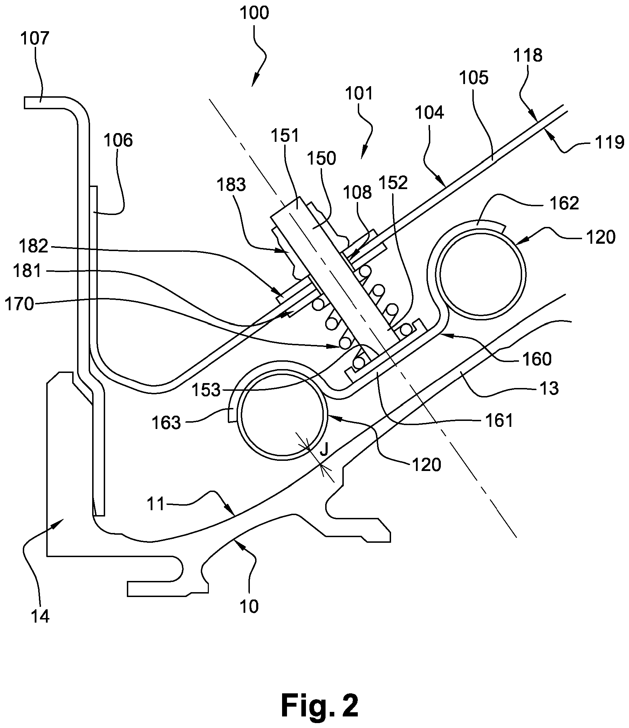

La figure 2 est une vue partielle en coupe d'un exemple de réalisation d'un système de refroidissement 100 par jets d'air selon l'invention monté autour d'un carter 10 de turbine de turbomachine. Dans l'exemple de réalisation représenté à la figure 2, le carter 10 est un carter de turbine basse pression.

Le système de refroidissement 100 selon l'invention comporte :
- une pluralité de tubes de refroidissement 120 (seulement deux tubes adjacents sont représentés à la figure 2) montés autour du carter 10 ;
- un dispositif de maintien 101 des tubes de refroidissement 120 pour le positionnement et le maintien des tubes de refroidissement 120 autour du carter 10.

Le système de refroidissement 100 dans l'exemple représenté est un dispositif de refroidissement LPTACC (Low Pressure Turbine Active Clearance Control en langue anglaise, pour contrôle des jeux pour turbine basse pression). Avec typiquement deux boîtiers d'alimentation, non représentés sur la figure 2, les tubes de refroidissement 120 et le dispositif de maintien 101 constituent le système de refroidissement 100 du carter 10 de turbine basse pression. Un tel système pourrait également s'appliquer à un dispositif de refroidissement LPTCC sans sortir du cadre de l'invention.

Classiquement, les deux tubes de refroidissement 120 présentent des petites ouvertures non visibles sur la figure 2. En fonctionnement, les boîtiers d'alimentation alimentent en air relativement frais par rapport au carter 10 les tubes de refroidissement 120, qui envoient vers la face extérieure 11 du carter 10 l'air ainsi disponible au travers des petites ouvertures (non visibles sur la figure). Typiquement, les deux boîtiers d'alimentation sont disposés de manière diamétralement opposée sur le carter 10. Ainsi, chaque zone des tubes de refroidissement 120 est alimentée en air par un boîtier d'alimentation disposé à moins d'un quart de tour du carter 10, ce qui permet d'avoir un débit d'air envoyé via les petites ouvertures des tubes de refroidissement 120 suffisant quelle que soit la zone considérée des tubes de refroidissement 120.

Le dispositif de maintien 101 comporte notamment une tôle de fixation 104 présentant une partie principale 105, une première extrémité 106 et une deuxième extrémité (non représentée). La tôle de fixation 104 est solidarisée sur le carter 10 par l'intermédiaire de platines intermédiaires 107 solidaires des extrémités de ladite tôle de fixation 104. La tôle de fixation 104 est solidaire des platines intermédiaires 107 par exemple par rivetage ou encore par boulonnage.

Le carter 10 présente un corps 13 et des rebords latéraux 14 (un seul rebord étant représenté à la figure 2). Chaque platine intermédiaire 105 est solidarisée sur le carter 10 au niveau des rebords latéraux 14 du carter 10, par exemple par rivetage ou par boulonnage.

La partie principale 105 de la tôle de fixation 104 présente une face externe 118, une face interne 119, et au moins une ouverture 108 traversante. La partie principale 105 de la tôle de fixation 104 peut comporter une portion ou une pluralité de portions, par exemple avec des décrochements comme illustrées dans le document FR1258238. Chaque portion est globalement plane et s'étend sur la totalité de la largeur de la partie principale 105 et deux portions consécutives forment un angle de sorte que la paroi principale 104 suit ainsi la forme générale du carter 10 grâce à ses différentes portions et aux angles qu'elles forment entre elles et/ou avec chacune des deux extrémités.

Le dispositif de maintien 101 comporte un moyen de réglage permettant de régler la position relative des tubes de refroidissement 120 par rapport à la tôle de fixation 104 et d'amortir les mouvements relatifs entre les tubes de refroidissement 120 et la tôle de fixation 104. Le moyen de réglage comporte un corps 150 traversant ladite au moins une ouverture 108. Le corps 150 est par exemple de forme cylindrique. Le corps 150 est mobile en translation au travers de ladite ouverture 108 et plus précisément selon une direction transversale au plan formé par l'ouverture 108 ou par la portion sur laquelle l'ouverture 108 est ménagée. La position relative du corps 150 par rapport à la tôle de fixation 108 est réglable via un élément de vissage 183 détaillé ci-après.

Le corps 150 de forme cylindrique présente une première extrémité 151 et une deuxième extrémité 152. La deuxième extrémité 152 est solidaire d'un élément de maintien 160 permettant l'accroche d'au moins un tube de refroidissement 120. L'élément de maintien 160 est par exemple une plaque de maintien préformée.

Selon l'exemple de réalisation illustré à la figure 2, la plaque de maintien 160 est par exemple obtenue par formage et présente une partie centrale 161 globalement plane et deux extrémités 162, 163 en forme de demi-anneaux destinées à épouser et à recouvrir, au moins partiellement, la forme annulaire de deux tubes de refroidissement 120 adjacents. Les tubes de refroidissement 120 sont solidarisés sur la plaque de maintien 160 par exemple par brasage. La plaque de maintien 160 permet avantageusement de solidariser les tubes de refroidissement au niveau d'une partie radialement externe des tubes de refroidissement, c'est-à-dire côté tôle de fixation 104, notamment de manière à éviter la présence d'une pièce ou d'un élément supplémentaire entre le tube de refroidissement 120 et le carter 10, et de manière à pouvoir rapprocher davantage les tubes de refroidissement 120 du carter 10 pour l'optimisation du refroidissement de celui-ci.

Avantageusement, la plaque de maintien 160 vient recouvrir au moins partiellement le pourtour des tubes de refroidissement et uniquement une partie radialement externe des tubes de refroidissement 120, notamment le pourtour des tubes de refroidissement en regard de la tôle de fixation 104.

Avantageusement, la plaque de maintien 160, telle que représentée, permet de solidariser deux tubes de refroidissement 120 au moyen d'une même et unique plaque de maintien 160. Dans ce mode de réalisation, on réalise un maintien et un positionnement de deux tubes de refroidissement circonférentiellement adjacents en réalisant uniquement une ouverture 108 dans la tôle de fixation 108. Ainsi, pour une turbomachine donnée avec un nombre de tube de refroidissement donné, la tôle de fixation 108 selon l'invention présentera moins d'ouverture 108 et moins de zone d'accroche qu'une tôle de fixation selon l'état de la technique. Toutefois, il est également envisagé de réaliser un élément de maintien permettant de solidariser individuellement un tube de refroidissement de manière à améliorer la précision de réglage de la position radiale des tubes de refroidissement 120 par rapport au carter 10.

Selon l'exemple de réalisation illustré à la figure 2, la deuxième extrémité 152 du corps cylindrique 150 présente une coupelle cylindrique 153 dont l'axe de révolution est orienté selon l'axe longitudinal du corps cylindrique 150. La coupelle cylindrique 153 est par exemple solidarisée sur le corps cylindrique 150 par brasage.

La coupelle cylindrique 153 permet notamment de former un élément d'appui et de créer une surface de contact suffisante pour le brasage de l'élément de maintien 160.

D'autre part, la coupelle cylindrique 153 forme un élément d'appui pour un ressort de rappel 170. Dans l'exemple de réalisation illustré à la figure 2, le ressort de rappel 170 est un ressort de compression monté sous la tôle de fixation et plus précisément entre la coupelle cylindrique 153 de la deuxième extrémité 152 du corps cylindrique 150 et la face interne 119 de la tôle de fixation 104. Une première rondelle 181 est intercalée entre le ressort de rappel 170 et la face interne 119 de la tôle de fixation 104. Ainsi, le ressort de rappel 170 est directement en appui sur la première rondelle 181 et non sur la tôle de fixation 104, notamment pour éviter les phénomènes d'usure.

Le ressort de rappel 170 est un élément élastique participant au réglage de la position du corps cylindrique 150, et donc de l'élément de maintien 160 des tubes de refroidissement 120 solidaire et permettant d'amortir les mouvements relatifs entre les tubes de refroidissement 120 et la tôle de fixation 104, les mouvements relatifs provenant notamment des dilatations différentielles entre les différents éléments du système de refroidissement et le carter 10. Le ressort de rappel 170 permet également d'amortir les vibrations de la turbomachine évitant ainsi une rupture du système de refroidissement en fonctionnement.

Au niveau de la face externe 118 de la tôle de fixation 104, un élément de vissage 183, tel qu'un écrou, coopère avec une portion filetée du corps 150 cylindrique ménagée par exemple au niveau de la première extrémité 151 du corps 150. L'élément de vissage 183 présente un moyen de freinage permettant d'éviter toute rotation de celui-ci sous l'effet de vibrations. L'élément de vissage 183 est par exemple un écrou auto-freiné.

Le ressort de rappel 170, l'écrou 183 coopérant avec la partie filetée du corps 150 forment le moyen de réglage du dispositif de maintien 101 permettant de modifier la position de l'élément de maintien 160 et des tubes de refroidissement par rapport à la tôle de fixation 104, et par rapport au carter 10.

Avantageusement une deuxième rondelle 182 est intercalée entre l'écrou 183 et la face externe 118 de la tôle de fixation 104, de sorte que la base de l'écrou 183 soit en contact avec la deuxième rondelle 182 et non directement avec la tôle de fixation 104, notamment pour éviter les phénomènes d'usure.

Ladite au moins une ouverture 108 ménagée dans la tôle de fixation 104 est avantageusement une ouverture de forme oblongue autorisant ainsi des déplacements du corps cylindrique 150, et de l'élément de maintien 160, dans un plan orthogonal à l'axe de l'ouverture 108 de manière à autoriser les dilatations différentielles des tubes de refroidissement 120 par rapport au carter 10 lors du fonctionnement.

Ainsi, grâce au dispositif de maintien selon l'invention, il est possible de modifier précisément la position relative de l'élément de maintien 160, et donc des tubes de refroidissement 120, par rapport au carter 10 par une simple rotation de l'écrou 183. Dans le cas où le filetage ménagé sur la première extrémité 151 du corps cylindrique présente un filet avec un pas à droite, alors le vissage de l'écrou 183 occasionne un éloignement des tubes de refroidissement 120 du carter 10, on augmente alors le jeu J entre les tubes de refroidissement 120 et le carter 10. A l'inverse, le dévissage de l'écrou 183 occasionne un rapprochement des tubes de refroidissement 120 du carter 10, on réduit alors le jeu J entre les tubes de refroidissement 120 et le carter 10. Le ressort de rappel 170 permet d'exercer une poussée constante sur l'élément de maintien 160 de manière à ce que l'écrou 183 soit constamment en appui sur la rondelle 182, notamment pour garantir un bon positionnement des tubes de refroidissement 120.

Le dispositif de maintien 101 selon l'invention permet donc de réaliser un réglage précis, simple, efficace en maitrisant le jeu J entre le carter 10 et chaque tube de refroidissement 120 ou groupe de plusieurs tubes de refroidissement 120 (par exemple deux tubes de refroidissement comme représenté sur la figure 2) par la suppression d'un collier de fixation entourant entièrement le tube de refroidissement. Ainsi, le dispositif de maintien selon l'invention permet de garantir un positionnement maitrisé des tubes de refroidissement 120 par rapport au carter 10 de manière individuelle (c'est-à-dire tube par tube) ou de manière groupée (par groupe de plusieurs tubes de refroidissement). Grâce à l'invention, le positionnement des tubes de refroidissement 120 est maîtrisé ce qui permet d'améliorer le refroidissement du carter tout en minimisant les risques de contact entre les tubes de refroidissement 120 et le carter 10 et donc l'usure du carter 10.

## Revendications

1. Dispositif de maintien (101) d'au moins un tube de refroidissement (120) d'un système de refroidissement (100) de carter (10) de turbomachine, le carter (10) s'étendant autour d'une direction axiale (X) de la turbomachine, le dispositif de maintien (101) comportant une tôle de fixation (104) adaptée pour être solidarisée au carter (10) et un élément de maintien (160) du tube de refroidissement (120), ledit dispositif de maintien (101) étant **caractérisé en ce qu'**il comporte un moyen de réglage (183, 150, 170) configuré pour régler la position relative dudit élément de maintien (160) par rapport à ladite tôle de fixation (104) et pour amortir un mouvement relatif entre l'élément de maintien (160) et la tôle de fixation (104).

2. Dispositif de maintien (101) d'au moins un tube de refroidissement (120) d'un système de refroidissement (100) de carter (10) de turbomachine selon la revendication 1 **caractérisé en ce que** ladite tôle de fixation (104) comporte une ouverture (108) et **en ce que** ledit moyen de réglage (183, 150, 170) comporte un corps (150) solidaire dudit ledit élément de maintien (160), ledit corps (150) étant mobile en translation au travers de ladite ouverture (108).

3. Dispositif de maintien (101) d'au moins un tube de refroidissement (120) d'un système de refroidissement (100) de carter (10) de turbomachine selon la revendication 2 **caractérisé en ce que** ledit corps (150) est un corps cylindrique présentant une portion filetée (151).

4. Dispositif de maintien (101) d'au moins un tube de refroidissement (120) d'un système de refroidissement (100) de carter (10) de turbomachine selon la revendication 3 **caractérisé en ce que** ledit moyen de réglage (183, 150, 170) comporte un élément de vissage (183) coopérant avec ladite portion filetée dudit corps (150) pour régler la position relative dudit élément de maintien (160) par rapport à ladite tôle de fixation (104).

5. Dispositif de maintien (101) d'au moins un tube de refroidissement (120) d'un système de refroidissement (100) de carter (10) de turbomachine selon la revendication 4 **caractérisé en ce que** l'élément de vissage (183) est un écrou auto-freiné.

6. Dispositif de maintien (101) d'au moins un tube de refroidissement (120) d'un système de refroidissement (100) de carter (10) de turbomachine selon l'une des revendications 1 à 5 **caractérisé en ce que** ledit moyen de réglage (183, 150, 170) comporte un élément élastique (170) de rappel pour amortir un mouvement relatif entre l'élément de maintien (160) et la tôle de fixation (104).

7. Dispositif de maintien (101) d'au moins un tube de refroidissement (120) d'un système de refroidissement (100) de carter (10) de turbomachine selon l'une des revendications 1 à 6 **caractérisé en ce que** ledit élément de maintien (160) est configuré pour être agencé en contact solidaire avec une partie radialement externe dudit au moins un tube de refroidissement (120).

8. Dispositif de maintien (101) d'au moins un tube de refroidissement (120) d'un système de refroidissement (100) de carter (10) de turbomachine selon l'une des revendications 1 à 7 **caractérisé en ce que** ledit élément de maintien (160) est configuré pour être agencé en contact solidaire avec deux tubes de refroidissement (120).

9. Dispositif de maintien (101) d'un tube de refroidissement (120) d'un système de refroidissement (100) de carter (10) de turbomachine selon l'une des revendications 1 à 8 **caractérisé en ce que** ladite ouverture (108) présente une forme autorisant un déplacement dudit élément de maintien (10) dans un plan orthogonal à un axe de l'ouverture (108) de ladite tôle de fixation (104).

10. Dispositif de maintien (101) d'un tube de refroidissement (120) d'un système de refroidissement (100) de carter (10) de turbomachine selon l'une des revendications 1 à 9 **caractérisé en ce que** ladite ouverture (108) présente une forme oblongue.

11. Système de refroidissement (100) de carter (10) de turbomachine comportant :
- un tube de refroidissement (120) ;
- un dispositif de maintien (101) d'au moins un tube de refroidissement (120) selon l'une des revendications 1 à 10, ledit tube de refroidissement (120) étant solidaire dudit dispositif de maintien (101) par brasage.

12. Système de refroidissement (100) de carter (10) de turbomachine selon la revendication 11 **caractérisé en ce qu'**il comporte une pluralité de tubes de refroidissement (120), une pluralité de dispositifs de maintien (101), chaque dispositif de maintien (101) de ladite pluralité assurant le maintien et le réglage simultané de la position de deux tubes de refroidissement (120) adjacents par rapport au carter.

13. Carter (10) de turbine basse pression de turbomachine **caractérisé en ce qu'**il comporte un système de refroidissement selon l'une des revendications 11 à 12, disposé de façon radialement externe par rapport au carter (10).

## Patentansprüche

1. Haltevorrichtung (101) wenigstens eines Kühlrohrs (120) eines Kühlsystems (100) eines Turbomaschinen-Gehäuses (10), wobei sich das Gehäuse (10) um eine axiale Richtung (X) der Turbomaschine erstreckt, wobei die Haltevorrichtung (101) ein Befestigungsblech (104), das geeignet ist, um an dem Gehäuse (10) fest befestigt zu sein, und ein Halteelement (160) des Kühlrohrs (120) umfasst, wobei die genannte Haltevorrichtung (101) **dadurch gekennzeichnet ist, dass** sie ein Einstellmittel (183, 150, 170) umfasst, das ausgelegt ist, um die Position relativ zum Halteelement (160) in Bezug auf das genannte Befestigungsblech (104) einzustellen und um eine relative Bewegung zwischen dem Halteelement (160) und dem Befestigungsblech (104) abzufedern.

2. Haltevorrichtung (101) wenigstens eines Kühlrohrs (120) eines Kühlsystems (100) eines Turbomaschinen-Gehäuses (10) gemäß Anspruch 1, **dadurch gekennzeichnet, dass** das genannte Befestigungsrohr (104) eine Öffnung (108) umfasst und dass das genannte Einstellmittel (183, 150, 170) einen Körper (150) umfasst, der fest mit dem genannten Haltemittel (160) verbunden ist, wobei der genannte Körper (150) in Translation durch die genannte Öffnung (108) mobil ist.

3. Haltevorrichtung (101) wenigstens eines Kühlrohrs (120) eines Kühlsystems (100) eines Turbomaschinen-Gehäuses (10) gemäß Anspruch 2, **dadurch gekennzeichnet, dass** der genannte Körper (150) ein zylindrischer Körper ist, der einen Gewindeabschnitt (151) aufweist.

4. Haltevorrichtung (101) wenigstens eines Kühlrohrs (120) eines Kühlsystems (100) eines Turbomaschinen-Gehäuses (10) gemäß Anspruch 3, **dadurch gekennzeichnet, dass** das genannte Einstellmittel (183, 150, 170) ein Verschraubungselement (183) umfasst, das mit dem genannten Gewindeabschnitt des genannten Körpers (150) zusammenwirkt, um die Position relativ zu dem genannten Halteelement (160) in Bezug auf das genannte Befestigungsblech (104) einzustellen.

5. Haltevorrichtung (101) wenigstens eines Kühlrohrs (120) eines Kühlsystems (100) eines Turbomaschinen-Gehäuses (10) gemäß Anspruch 4, **dadurch gekennzeichnet, dass** das Verschraubungselement (183) eine selbstsichernde Mutter ist.

6. Haltevorrichtung (101) wenigstens eines Kühlrohrs (120) eines Kühlsystems (100) eines Turbomaschinen-Gehäuses (10) gemäß einem der Ansprüche 1 bis 5, **dadurch gekennzeichnet, dass** das genannte Einstellmittel (183, 150, 170) ein elastisches Rückholelement (170) umfasst, um eine relative Bewegung zwischen dem Halteelement (160) und dem Befestigungsblech (104) abzufedern.

7. Haltevorrichtung (101) wenigstens eines Kühlrohrs (120) eines Kühlsystems (100) eines Turbomaschinen-Gehäuses (10) gemäß einem der Ansprüche 1 bis 6, **dadurch gekennzeichnet, dass** das Halteelement (160) ausgelegt ist, um in fest verbundenem Kontakt mit einem radial externen Teil des genannten wenigstens einen Kühlrohrs (120) angeordnet zu sein.

8. Haltevorrichtung (101) wenigstens eines Kühlrohrs (120) eines Kühlsystems (100) eines Turbomaschinen-Gehäuses (10) gemäß einem der Ansprüche 1 bis 7, **dadurch gekennzeichnet, dass** das genannte Halteelement (160) ausgelegt ist, um in fest verbundenem Kontakt mit zwei Kühlrohren (120) angeordnet zu sein.

9. Haltevorrichtung (101) wenigstens eines Kühlrohrs (120) eines Kühlsystems (100) eines Turbomaschinen-Gehäuses (10) gemäß einem der Ansprüche 1 bis 8, **dadurch gekennzeichnet, dass** die genannte Öffnung (108) eine Form aufweist, die eine Verschiebung des genannten Halteelements (10) in einer Ebene aufweist, die zu einer Achse der Öffnung (108) des genannten Befestigungsblechs (4) orthogonal ist.

10. Haltevorrichtung (101) wenigstens eines Kühlrohrs (120) eines Kühlsystems (100) eines Turbomaschinen-Gehäuses (10) gemäß einem der Ansprüche 1 bis 9, **dadurch gekennzeichnet, dass** die genannte Öffnung eine längliche Form aufweist.

11. Kühlsystem (100) eines Turbomaschinen-Gehäuses (10), umfassend:
- ein Kühlrohr (120);
- eine Haltevorrichtung (101) wenigstens eines Kühlrohrs (120) gemäß einem der Ansprüche 1 bis 10, wobei das genannte Kühlrohr (120) fest mit der genannten Haltevorrichtung (101) per Löten verbunden ist.

12. Kühlsystem (100) eines Turbomaschinen-Gehäuses (10) gemäß Anspruch 11, **dadurch gekennzeichnet, dass** es eine Vielzahl von Kühlrohren (120), eine Vielzahl von Haltevorrichtungen (101) umfasst, wobei jede Haltevorrichtung (101) der genannten Vielzahl das Halten und die gleichzeitige Einstellung der Position von zwei in Bezug auf das Gehäuse anliegenden Kühlrohren (120) gewährleistet.

13. Niedrigdruck-Turbinengehäuse (10) einer Turbomaschine, **dadurch gekennzeichnet, dass** es ein Kühlsystem gemäß einem der Ansprüche 11 bis 12 umfasst, das radial extern in Bezug auf das Gehäuse (10) angeordnet ist.

## Claims

1. Retention device (101) for at least one cooling tube (120) of a cooling system (100) of a turbomachine casing (10), the casing (10) extending around an axial direction (X) of the turbomachine, the retention device (101) comprising a fixing plate (104) suited to being made integral with the casing (10) and a retention element (160) for the cooling tube (120), said retention device (101) being **characterised in that** it comprises an adjustment means (183, 150, 170) configured to adjust the relative position of said retention element (160) with respect to said fixing plate (104) and to absorb a relative movement between the retention element (160) and the fixing plate (104).

2. Retention device (101) for at least one cooling tube (120) of a cooling system (100) of a turbomachine casing (10) according to claim 1 **characterised in that** said fixing plate (104) comprises an opening (108) and **in that** said adjustment means (183, 150, 170) comprise a body (150) integral with said retention element (160), said body (150) being translationally moveable through said opening (108).

3. Retention device (101) for at least one cooling tube (120) of a cooling system (100) of a turbomachine casing (10) according to claim 2 **characterised in that** said body (150) is a cylindrical body having a threaded portion (151).

4. Retention device (101) for at least one cooling tube (120) of a cooling system (100) of a turbomachine casing (10) according to claim 3 **characterised in that** said adjustment means (183, 150, 170) comprise a screwing element (183) cooperating with said threaded portion of said body (150) to adjust the relative position of said retention element (160) with respect to said fixing plate (104).

5. Retention device (101) for at least one cooling tube (120) of a cooling system (100) of a turbomachine casing (10) according to claim 4 **characterised in that** the screwing element (183) is a self-locking nut.

6. Retention device (101) for at least one cooling tube (120) of a cooling system (100) of a turbomachine casing (10) according to one of claims 1 to 5 **characterised in that** said adjustment means (183, 150, 170) comprise an elastic return element (170) to absorb a relative movement between the retention element (160) and the fixing plate (104).

7. Retention device (101) for at least one cooling tube (120) of a cooling system (100) of a turbomachine casing (10) according to one of claims 1 to 6 **characterised in that** said retention element (160) is configured to be arranged in integral contact with a radially outer part of said at least one cooling tube (120).

8. Retention device (101) for at least one cooling tube (120) of a cooling system (100) of a turbomachine casing (10) according to one of claims 1 to 7 **characterised in that** said retention element (160) is configured to be arranged in integral contact with two cooling tubes (120).

9. Retention device (101) for a cooling tube (120) of a cooling system (100) of a turbomachine casing (10) according to one of claims 1 to 8 **characterised in that** said opening (108) has a shape allowing a displacement of said retention element (10) in a plane orthogonal to an axis of the opening (108) of said fixing plate (104).

10. Retention device (101) for a cooling tube (120) of a cooling system (100) of a turbomachine casing (10) according to one of claims 1 to 9 **characterised in that** said opening (108) has an oblong shape.

11. Cooling system (100) of a turbomachine casing (10) comprising:
- a cooling tube (120);
- a retention device (101) for at least one cooling tube (120) according to one of claims 1 to 10, said cooling tube (120) being made integral with said retention device (101) by brazing.

12. Cooling system (100) of a turbomachine casing (10) according to claim 11 **characterised in that** it comprises a plurality of cooling tubes (120), a plurality of retention devices (101), each retention device (101) of said plurality ensuring the simultaneous retention and adjustment of the position of two cooling tubes (120) adjacent to the casing.

13. Casing (10) for a turbomachine low pressure turbine **characterised in that** it comprises a cooling system according to one of claims 11 to 12 arranged in a radially outer manner with respect to the casing (10).
